# DEMANDE DE BREVET EUROPEEN

(11) **EP 4 057 081 A1**
(43) Date de publication de la demande: **14.09.2022**
(21) Numéro de dépôt: 21162389.7
(22) Date de dépôt: 12.03.2021
(51) Int. Cl.: G04B 19/16, G04B 19/06, G04C 10/02

(54) **MONTRE SOLAIRE COMPRENANT UN DISPOSITIF D'OBTURATION**

(71) Demandeur: The Swatch Group Research and Development Ltd, 2074 Marin (CH)
(72) Inventeur: IMBODEN, Matthias, 2072 St-Blaise (CH)
(74) Mandataire: ICB SA

(57) **Abrégé**

L'invention concerne une montre (10) comprenant un boitier pourvu d'un fond, d'une glace (12), d'un ensemble de composants formant un mouvement horloger (13), et d'un cadran (14) disposé entre le mouvement et la glace (12), ledit cadran (14) comportant un module de cellules photovoltaïques (16) relié à un accumulateur électrique (17) destiné à fournir une source d'énergie électrique à la montre (10), ledit cadran (14) comprenant en outre un dispositif d'obturation (18) agencé entre le module de cellules photovoltaïques (16) et la glace (12) de la montre (10), et configuré pour occuper un état d'obturation dans lequel il masque l'ensemble du module de cellules photovoltaïques (16) et un état d'exposition dans lequel il expose tout ou partie du module de cellules photovoltaïques (16).

## Description

### Domaine technique de l'invention

L'invention relève du domaine de l'horlogerie, et notamment du domaine des montres solaires comportant un accumulateur électrique alimenté par une cellule photovoltaïque.

Plus particulièrement, l'invention concerne une montre solaire comprenant un dispositif d'obturation.

### Arrière-plan technologique

Les montres solaires comportent de manière connue un accumulateur électrique alimenté par des cellules photovoltaïques afin de pourvoir en énergie un mouvement horloger électronique à quartz ou une fonction électronique auxiliaire.

Les cellules photovoltaïques sont disposées sous la glace de la montre, généralement sur le cadran de sorte à absorber un maximum de lumière et générer suffisamment d'énergie pour alimenter l'accumulateur électrique et conférer ainsi au mouvement horloger électronique ou à la fonction électronique auxiliaire une autonomie convenable pour un utilisateur.

Toutefois, les cellules photovoltaïques présentent un aspect esthétique particulier qui peut ne pas être compatible avec les attentes potentielles des utilisateurs.

Il a donc été recherché par certains fabricants de montres de masquer les cellules photovoltaïques.

Notamment, on connait de l'état de la technique des montres dans lesquelles les cellules photovoltaïques sont disposées sous un cadran réalisé dans un matériau translucide. Par exemple, le cadran peut être constitué par une fine feuille de céramique ou de nacre, ou par au moins une encre translucide déposée sur un substrat transparent.

Il existe également des cadrans comprenant une pluralité de trous traversant invisibles à l'œil nu, un état de surface particulier ou un traitement particulier, permettant d'exposer les cellules photovoltaïques à la lumière tout en les soustrayant à la vue de l'utilisateur.

Cependant, ces solutions ne donnent pas entière satisfaction dans le sens où, lors de leur mise en œuvre, les cellules photovoltaïques présentent généralement un rendement global relativement faible, et par voie de conséquence, la durée de chargement de l'accumulateur est particulièrement longue.

Il existe donc un besoin de fournir une montre solaire dont les cellules photovoltaïques peuvent être dissimulées à la vue d'un utilisateur, de sorte que le cadran de ladite montre puisse présenter un aspect visuel souhaité, tout en permettant aux cellules photovoltaïques de conserver un rendement élevé si nécessaire.

### Résumé de l'invention

L'invention résout les inconvénients précités en proposant une montre solaire permettant une recharge efficace de l'accumulateur électrique tout en permettant de conserver le plus souvent possible un aspect esthétique correspondant aux souhaits de l'utilisateur, par exemple un aspect visuel d'une montre traditionnelle, c'est-à-dire comportant un cadran présentant ou non des décorations.

A cet effet, la présente invention concerne une montre comprenant un boitier pourvu d'une carrure à laquelle sont fixés un fond et une glace, d'un ensemble de composants formant un mouvement horloger, et d'un cadran disposé entre le mouvement et la glace, le cadran comportant un module de cellules photovoltaïques relié à un accumulateur électrique destiné à fournir une source d'énergie électrique.

Le cadran comprend en outre un dispositif d'obturation agencé entre le module de cellules photovoltaïques et la glace de la montre, et configuré pour pouvoir occuper un état d'obturation dans lequel il masque l'ensemble du module de cellules photovoltaïques et un état d'exposition dans lequel il expose tout ou partie du module de cellules photovoltaïques.

Dans des modes particuliers de réalisation, l'invention peut comporter en outre l'une ou plusieurs des caractéristiques suivantes, prises isolément ou selon toutes les combinaisons techniquement possibles.

Dans des modes particuliers de réalisation, la montre comprend un mécanisme de commande comportant un système de transmission de mouvement configuré pour déplacer des éléments d'obturation du dispositif d'obturation sous les sollicitations d'un organe d'actionnement, de sorte à entraîner le dispositif d'obturation dans l'état d'obturation ou dans l'état d'exposition.

Les états d'exposition et d'obturation du dispositif d'obturation sont respectivement définis par des positions distinctes prises par ledit dispositif.

Dans des modes particuliers de réalisation, l'organe d'actionnement est constitué par un moteur piloté par des consignes délivrées par une unité de commande.

Dans des modes particuliers de réalisation, l'unité de commande comporte un capteur de luminosité configuré pour piloter le moteur de sorte à entraîner le dispositif d'obturation dans l'état d'obturation lorsque la luminosité est en dessous d'un certain seuil et dans l'état d'exposition lorsque la luminosité est au-dessus dudit seuil.

Dans des modes particuliers de réalisation, l'unité de commande comporte un capteur apte à délivrer une information relative à l'état de charge de l'accumulateur, à l'unité de commande, cette dernière étant configurée pour piloter le moteur de sorte à entraîner le dispositif d'obturation dans l'état d'exposition lorsque l'information fournie par ledit capteur est représentative d'un état de charge de l'accumulateur inférieur à un seuil prédéfini.

Dans des modes particuliers de réalisation, l'unité de commande est configurée pour piloter le moteur de sorte à entraîner le dispositif d'obturation dans l'état d'exposition, en réponse à la sollicitation de capteurs de mouvement et/ou de géolocalisation, lorsque ladite sollicitation provoque l'émission d'un signal représentatif d'une activité physique ou sportive de l'utilisateur.

Dans des modes particuliers de réalisation, l'unité de commande est configurée pour piloter le moteur sur la base d'instructions résultant du traitement par apprentissage automatique de données récoltées et accumulées dans le temps par des capteurs de mouvement, de géolocalisation et/ou de luminosité.

Dans des modes particuliers de réalisation, l'organe d'actionnement est constitué par une lunette, une couronne ou un bouton poussoir.

Dans des modes particuliers de réalisation, l'organe d'actionnement est constitué par le mouvement horloger, de sorte que le dispositif d'obturation soit piloté pour occuper l'état d'obturation à une heure prédéfinie et soit piloté pour occuper l'état d'exposition à une heure prédéfinie.

Dans des modes particuliers de réalisation, le dispositif d'obturation est formé par un iris à lamelles, lesdites lamelles étant configurées pour se loger dans la carrure lorsque le dispositif d'obturation occupe l'état d'exposition et étant configurées pour être déployées de sorte à recouvrir le module de cellules photovoltaïques lorsque le dispositif d'obturation occupe l'état d'obturation.

Dans des modes particuliers de réalisation, le dispositif d'obturation comporte deux disques comportant des secteurs circulaires opaques et des secteurs circulaires transparents, lesdits disques étant agencés coaxialement en vis-à-vis l'un de l'autre et mobiles en rotation l'un relativement à l'autre.

Les disques sont configurés de sorte que les secteurs circulaires opaques et les secteurs circulaires transparents d'un disque soient agencés respectivement en regard des secteurs circulaires opaques et les secteurs circulaires transparents de l'autre disque, pour que le dispositif d'obturation occupe l'état d'exposition, et de sorte que les secteurs circulaires opaques et les secteurs circulaires transparents d'un disque soient agencés respectivement en regard des secteurs circulaires transparents et des secteurs circulaires opaques de l'autre disque, pour que le dispositif d'obturation occupe l'état d'obturation.

Dans des modes particuliers de réalisation, le dispositif d'obturation est formé par un ensemble de lamelles de la forme de secteurs circulaires, agencées de manière mobile en rotation autour de l'axe des aiguilles les unes par rapport aux autres de sorte à être adjacentes les unes des autres pour que le dispositif d'obturation occupe l'état d'obturation, et de sorte à être superposées les unes aux autres pour que le dispositif d'obturation occupe l'état d'exposition.

Dans des modes particuliers de réalisation, le dispositif d'obturation est formé par un ensemble de volets s'étendant en longueur parallèlement les uns aux autres, lesdits volets étant configurés pour être entraînés en rotation autour de leur axe longitudinal de sorte que les flancs latéraux d'un volet soient attenants aux flancs latéraux des volets adjacents pour que le dispositif d'obturation occupe l'état d'obturation.

Dans des modes particuliers de réalisation, le module de cellules photovoltaïques est recouvert d'une couche de lubrifiant, ladite couche étant interposée entre ledit module et le dispositif d'obturation.

Dans des modes particuliers de réalisation, le dispositif d'obturation comporte un disque présentant des propriétés photochromiques négatives, c'est-à-dire que le disque est adapté à présenter un aspect opaque lorsque la luminosité ambiante est inférieure à un certain seuil et à présenter un aspect transparent lorsque la luminosité ambiante est supérieure audit seuil.

Dans des modes particuliers de réalisation, le dispositif d'obturation comporte un disque présentant des propriétés électrochromiques, la montre comportant un module de gestion relié à un capteur de luminosité et configuré pour soumettre le disque à une tension électrique d'intensité prédéterminée pour que ledit disque prenne un aspect opaque lorsque la luminosité ambiante est inférieure à un seuil prédéfini.

Dans des modes particuliers de réalisation, le module de gestion est configuré de sorte à soumettre le disque à une tension électrique d'intensité prédéterminée pour que ledit disque prenne un aspect opaque, lorsque l'accumulateur électrique est entièrement chargé.

Dans des modes particuliers de réalisation, la montre comprend un organe d'actionnement configuré pour commander, sur sollicitation de l'utilisateur, le module de gestion de sorte à, alternativement, appliquer ou non une tension au disque afin qu'il prenne un aspect opaque ou transparent.

### Brève description des figures

D'autres caractéristiques et avantages de l'invention apparaîtront à la lecture de la description détaillée suivante donnée à titre d'exemple nullement limitatif, en référence aux dessins annexés dans lesquels :
- la figure 1 représente schématiquement une vue en coupe d'un boitier d'une montre comprenant un dispositif d'obturation selon une forme de réalisation de l'invention, dans lequel un dispositif d'obturation occupe un état d'obturation dans lequel il masque l'ensemble d'un module de cellules photovoltaïques ;
- la figure 2 représente une vue de face de la montre de la figure 1 comprenant un exemple de dispositif d'obturation selon une autre forme de réalisation de l'invention, ledit dispositif d'obturation étant formé par un iris à lamelles et étant dans l'état d'obturation ;
- la figure 3a représente une vue en coupe d'un boitier d'une montre selon la figure 2 comprenant un autre exemple de dispositif d'obturation,
- les figures 3b et 3c représentent une vue isolée de face du dispositif d'obturation de la figure 3a occupant respectivement un état d'exposition et l'état d'obturation,
- les figures 4a et 4b représentent une vue isolée de face d'un autre exemple du dispositif d'obturation occupant respectivement un état intermédiaire et un état d'exposition.
- les figures 5a à 5c représentent une vue isolée de face d'un autre exemple du dispositif d'obturation occupant respectivement un état d'obturation, un état intermédiaire et un état d'exposition.
- la figure 6 représente schématiquement en perspective un exemple d'un mécanisme de commande dont est dotée la montre de la figure 2, ledit exemple étant appliqué à l'exemple de réalisation du dispositif d'obturation représenté sur les figures 5a à 5c,
- la figure 7 représente schématiquement en perspective un exemple d'un système de transmission dont est dotée la montre de la figure 2, ledit exemple étant appliqué à l'exemple de réalisation du dispositif d'obturation représenté sur les figures 5a à 5c
- la figure 8 représente un schéma bloc du boitier d'une montre de la figure 1 selon une autre forme de réalisation de l'invention.

### Description détaillée de l'invention

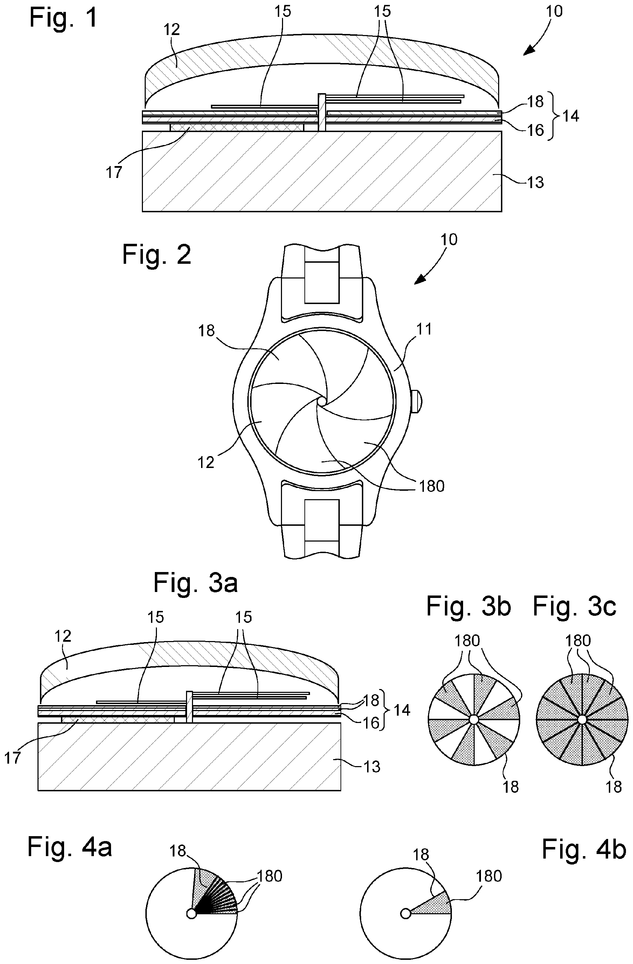

La présente invention concerne une montre 10 schématiquement représentée sur la vue en coupe de la figure 1 comprenant un boitier pourvu d'une carrure 11 à laquelle sont fixés un fond et une glace 12, d'un ensemble de composants formant un mouvement horloger 13, et d'un cadran 14 disposé entre le mouvement horloger 13 et la glace 12.

Le mouvement horloger 13 entraîne de façon connue de l'homme du métier un aiguillage 15 comprenant une aiguille des heures, une aiguille des minutes et éventuellement une aiguille des secondes. A cet effet, le cadran 14 comporte un trou traversant recevant l'axe des aiguilles.

Dans l'exemple de réalisation de l'invention décrit dans le présent texte, le mouvement horloger 13 est un mouvement à quartz.

Afin de fournir une source d'énergie électrique pour alimenter le mouvement horloger 13, le cadran 14 comporte un module de cellules photovoltaïques 16 relié à un accumulateur électrique 17. Les cellules photovoltaïques 16 s'étendent préférentiellement sur l'ensemble de la surface visible du cadran 14, comme le montre la vue en coupe de la figure 1.

Le module de cellules photovoltaïques 16 peut comprendre une ou des cellules élémentaires du type à hétérojonction ou multijonction, connectées en parallèle ou en série. Les cellules photovoltaïques 16 peuvent être réalisées, de manière connue de l'homme du métier, à partir de matériaux semi-conducteur à base de cuivre, d'indium, de gallium et de sélénium, à base de tellurure de cadmium, à base d'arséniure de gallium monocristallin ou à base de silicium monocristallin ou polycristallin, ou à pérovskites. Il y a lieu de noter que ces exemples sont non limitatifs et que l'homme du métier saura trouver le type de cellules photovoltaïques adapté à l'invention.

Alternativement, si le mouvement horloger 13 est un mouvement mécanique, la source d'énergie électrique peut être destinée à alimenter un mécanisme d'une fonction électronique auxiliaire, par exemple une boussole, un altimètre, un capteur de température, un dispositif d'éclairage, etc., ladite fonction électronique auxiliaire étant non représentée sur les figures.

Le cadran 14 comprend en outre un dispositif d'obturation 18 agencé entre le module de cellules photovoltaïques 16 et la glace 12 de la montre 10.

Préférentiellement, pour des raisons de compacité de la montre 10, le dispositif d'obturation 18 peut être agencé contre le module de cellules photovoltaïques 16. Dans ce cas, ledit module est alors avantageusement recouvert d'une couche de lubrifiant, ladite couche étant alors interposée entre ledit module et le dispositif d'obturation 18. Le lubrifiant est avantageusement sélectionné pour son impact limité sur les performances électrooptiques des cellules photovoltaïques choisies.

Le dispositif d'obturation 18 est configuré pour pouvoir occuper un état d'obturation dans lequel il masque l'ensemble du module de cellules photovoltaïques 16, comme schématiquement représenté sur la figure 1, et un état d'exposition dans lequel il expose tout ou partie du module de cellules photovoltaïques 16.

Il y a lieu de noter ici que dans certains cas, par exemple lorsque le module de cellules photovoltaïques est constitué de plusieurs cellules, l'ensemble desdites cellules doit être exposé à une intensité lumineuse sensiblement similaire pour garantir le bon fonctionnement dudit module.

Dans une forme de réalisation de l'invention représentée schématiquement sur la figure 1, le dispositif d'obturation 18 comporte un disque comprenant des propriétés photochromiques négatives, c'est-à-dire que le disque est adapté à présenter un aspect opaque lorsque la luminosité ambiante est inférieure à un certain seuil et à présenter un aspect transparent lorsque la luminosité ambiante est supérieure audit seuil.

On entend par les termes « luminosité ambiante » dans le présent texte, le rayonnement optique impactant le cadran 14 de la montre 10.

Par exemple, un tel disque peut être réalisé à l'aide d'un complexe de fer et de magnésium.

Cette forme de réalisation de l'invention est avantageusement simple et peu couteuse à développer et à produire.

En outre, grâce au disque, le module de cellules photovoltaïques 16 peut s'étendre sur une surface égale à celle du cadran 14, la totalité de cette surface pouvant être masquée ou exposée par ledit disque.

La surface du module de cellules photovoltaïques 16 pouvant être totalement exposée lorsque les conditions sont adéquates, l'efficacité du chargement de l'accumulateur électrique 17 s'en trouve avantageusement considérablement augmentée.

Alternativement, le disque peut présenter des propriétés électrochromiques, c'est-à-dire que l'aspect opaque ou transparent du matériau qui le constitue peut varier en lui appliquant une tension électrique ou non.

A cet effet, la montre 10 peut comporter un module de gestion relié à un capteur de luminosité et configuré pour soumettre le disque à une tension électrique d'intensité prédéterminée pour que ledit disque prenne un aspect opaque lorsque la luminosité ambiante est inférieure à un seuil prédéfini.

Par ailleurs, le reste du temps, le module de gestion n'applique pas de tension électrique au disque de sorte à ce qu'il conserve son aspect transparent et que l'accumulateur électrique 17 puisse être rechargé.

En outre, le module de gestion peut être configuré de sorte à soumettre le disque à une tension électrique d'intensité prédéterminée pour que ledit disque prenne un aspect opaque lorsque l'accumulateur électrique 17 est entièrement chargé.

Ainsi, lorsqu'il présente un aspect opaque, le disque permet de protéger l'accumulateur électrique 17 d'une éventuelle surcharge.

Par ailleurs, la montre 10 peut comprendre un organe d'actionnement 19 configuré pour commander le module de gestion, sur sollicitation de l'utilisateur, de sorte à, alternativement, appliquer ou non une tension électrique au disque afin qu'il prenne un aspect opaque ou transparent. En d'autres termes, l'organe d'actionnement 19 est configuré pour entraîner le dispositif d'obturation 18 alternativement dans l'état d'obturation et dans l'état d'exposition selon le choix de l'utilisateur. Des exemples d'organe d'actionnement sont cités dans la suite du texte.

Dans une autre forme de réalisation représentée sur les figures 2 à 8, la montre 10 comporte un mécanisme de commande comportant un système de transmission 20 de mouvement configuré pour déplacer des éléments d'obturation 180 du dispositif d'obturation 18 sous les sollicitations de l'organe d'actionnement 19, de sorte à entraîner le dispositif d'obturation 18 alternativement dans l'état d'obturation et dans l'état d'exposition.

Avantageusement, lorsque le dispositif d'obturation 18 occupe l'état d'obturation, les éléments d'obturation 180 s'étendent en regard de l'ensemble de la surface du module de cellules photovoltaïques 16 et présentent une face externe visible, dite «face d'habillage », et une face interne destinée à être en regard du module de cellules photovoltaïques 16.

Lorsque le dispositif d'obturation 18 occupe l'état d'obturation, la face d'habillage est visible par l'utilisateur et permet à la montre 10 de conserver un aspect esthétique souhaité, selon l'aspect visuel de la face d'habillage.

Dans des exemples de réalisation de cette forme de réalisation décrits ci-après, les éléments d'obturation 180 peuvent être réalisés en matériau métallique ou en matériau polymère, tel qu'en plastique, ou en tout autre matériau approprié.

A ce titre, ladite face d'habillage peut comporter un revêtement, par exemple réalisé par tout type de méthode de dépôt en couche mince connue en tant que telle par l'homme du métier.

Par ailleurs, préférentiellement, lorsque le dispositif d'obturation 18 occupe l'état d'exposition, les éléments d'obturation 180 ne sont pas ou sont peu visibles pour un utilisateur, ce qui permet de maximiser la surface du module de cellules photovoltaïques 16 exposée à la luminosité ambiante.

Des exemples d'éléments d'obturation 180 sont décrits en détail ci-après et sont représentés sur les figures 2 à 5c.

Sur la figure 2 est représentée une montre 10 de face comprenant un exemple de dispositif d'obturation 18 formé par un iris à lamelles, lequel est dans l'état d'obturation. Les éléments d'obturation 180 sont alors formés par les lamelles qui sont configurées pour se loger dans la carrure 11, ou par exemple sous une lunette, afin de se soustraire à la vue d'un utilisateur lorsque le dispositif d'obturation 18 occupe l'état d'exposition, et pour être déployées de sorte à recouvrir le module de cellules photovoltaïques 16 lorsque le dispositif d'obturation 18 occupe l'état d'obturation.

Plus particulièrement, les lamelles se superposent les unes avec les autres et s'étendent chacune entre une extrémité dite « extrémité proximale » et une extrémité dite « extrémité distale », ladite extrémité proximale étant fixée de manière libre en rotation dans une bague fixe par rapport à la carrure 11 ou directement dans ladite carrure 11.

L'extrémité proximale comporte une goupille ou un téton s'étendant de sorte à coopérer avec une lumière formée dans une bague mobile en rotation autour d'un axe sensiblement coaxial avec celui des aiguilles. Les lumières s'étendent hélicoïdalement dans la bague, de sorte que la rotation de ladite bague provoque le pivotement des lamelles, et ainsi, la formation d'une ouverture centrale plus ou moins grande autour de l'axe des aiguilles.

La détermination de la forme la plus appropriée des lamelles est, en tant que telle, à la portée de l'homme du métier.

Dans d'autres variantes de réalisation de l'iris à lamelles, les lamelles sont entraînées en rotation lors de la rotation de la bague mobile par tout mécanisme adapté, dont la conception est, en tant que telle, à la portée de l'homme du métier.

Un des avantages de la réalisation du dispositif d'obturation 18 sous la forme d'un iris à lamelles réside dans le fait que les éléments d'obturation 180, ici les lamelles, sont entièrement dégagées du module de cellules photovoltaïques 16 lorsque ledit dispositif d'obturation 18 occupe l'état d'exposition.

Dans un autre exemple de réalisation du dispositif d'obturation 18 représentés sur les figures 3a à 3c, le dispositif d'obturation 18 est formé par deux disques disposés coaxialement en vis-à-vis, lesdits disques étant pourvus d'un trou traversant à travers lequel s'étend l'axe des aiguilles.

Les disques sont par exemple réalisés en polycarbonate.

Comme visibles sur les figures 3b et 3c, chacun des disques comporte, sur sa face en vis-à-vis de l'autre disque, une pluralité de secteurs circulaires opaques régulièrement répartis, à distance les uns des autres, autour du centre de chaque disque. De la sorte, chaque disque comporte une alternance de secteurs circulaires opaques et transparents ; c'est-à-dire que chaque secteur transparent est interposé entre deux secteurs opaques, et que chaque secteur opaque est interposé entre deux secteurs transparents, comme représenté en particulier sur la vue de face de la figure 3b.

Les secteurs circulaires opaques forment les éléments d'obturation 180 et peuvent être réalisés par des méthodes d'impression ou de dépôt de couche mince. Avantageusement, les secteurs circulaires opaques des disques sont agencés sur les faces desdits disques par lesquelles ils sont en vis-à-vis.

Les secteurs circulaires opaques d'un disque présentent des dimensions complémentaires des secteurs circulaires de l'autre disque, dans le sens où lorsque le dispositif d'obturation 18 est en état d'obturation, les secteurs opaques d'un disque se trouvent en regard de l'ensemble de la surface des secteurs transparents de l'autre disque, comme le montre la vue de face de la figure 3c.

Pour que le dispositif d'obturation 18 atteigne l'état d'obturation, un des disques est configuré pour être entraîné en rotation par le mécanisme de commande autour de l'axe des aiguilles relativement à l'autre disque, ce dernier étant fixe par rapport à la carrure 11.

Lorsque le dispositif d'obturation 18 occupe l'état d'exposition, les secteurs circulaires opaques de chaque disque sont superposés les uns aux autres, de sorte à exposer le module des cellules photovoltaïques 16 à la luminosité ambiante, tel que représenté sur les figures 3b et 4b.

Dans l'état d'exposition, le dispositif d'obturation 18 expose sensiblement 50% de la surface du cadran 14.

A titre d'exemple non limitatif, les disques comportent chacun six secteurs opaques et six secteurs transparents.

Dans un autre exemple de réalisation du dispositif d'obturation 18 non représenté sur les figures, le dispositif d'obturation 18 peut être analogue à celui décrit précédemment à la différence que les disques sont formés par des ensembles de lamelles s'étendant radialement entre la carrure 11 et l'axe des aiguilles, lesdites lamelles étant séparées les unes des autres par des orifices traversants. Les lamelles peuvent être reliées entre elles, à chacune de leurs extrémités, par un anneau périphérique s'étendant autour desdites lamelles et par un anneau central agencé autour de l'axe des aiguilles.

Les lamelles et les orifices traversants présentent chacun la forme d'un secteur de disque, lesdites lamelles étant dimensionnées de sorte à recouvrir l'ensemble de la surface du cadran 14 lorsque le dispositif d'obturation 18 est en état d'obturation.

Les disques sont mobiles en rotation l'un par rapport à l'autre. Plus particulièrement, un des disques comporte des lamelles, dites « lamelles mobiles », et est configuré pour être entraîné en rotation autour de l'axe des aiguilles relativement à l'autre disque, ledit autre disque comportant des lamelles, dites « lamelles fixes », agencées de manière fixe par rapport à la carrure 11.

Comme décrit dans le précédent exemple de réalisation du dispositif d'obturation 18, les disques présentent préférentiellement un nombre de lamelles identique, par exemple six.

Les lamelles sont disposées de sorte qu'une lamelle fixe soit adjacente à une lamelle mobile, c'est-à-dire de sorte que chaque lamelle fixe soit interposée entre deux lamelles mobiles et que chaque lamelle mobile soit interposée entre deux lamelles fixes, lorsque le dispositif d'obturation 18 est en état d'obturation.

Ainsi, lorsque que le dispositif d'obturation 18 occupe l'état d'exposition, chaque lamelle mobile est superposée à une lamelle fixe ou inversement.

Dans encore un autre exemple de réalisation du dispositif d'obturation 18, ici représenté schématiquement sur les figures 4a et 4b, les éléments d'obturation 180 peuvent être formés par un ensemble de lamelles de la forme de secteurs circulaires, agencées de manière adjacente les unes aux autres et de sorte à être adaptées à se superposer les unes aux autres.

Plus particulièrement, les lamelles sont toutes mobiles en rotation autour de l'axe des aiguilles, à l'exception d'une lamelle fixe, les lamelles mobiles étant configurées de sorte à être successivement entrainées en rotation afin d'exposer progressivement le module de cellules photovoltaïques 16, lorsque le dispositif d'obturation 18 passe de l'état d'obturation à l'état d'exposition. Une telle disposition est illustrée schématiquement par la figure 4a.

Ainsi, les lamelles mobiles sont superposées à la lamelle fixe, ou inversement, lorsque le dispositif d'obturation 18 occupe l'état d'exposition, comme le montre la figure 4b.

Il y a lieu de noter que lorsque le dispositif d'obturation 18 selon cet exemple de réalisation occupe l'état d'obturation, il est conforme à la représentation schématique de la figure 3c.

Cette caractéristique autorise notamment le dispositif d'obturation 18 à présenter des états intermédiaires entre les états d'exposition et d'obturation. En outre, cette caractéristique permet de pouvoir choisir la surface occupée sur le cadran 14 par le dispositif d'obturation 18 et par le module de cellules photovoltaïques 16. A titre d'exemple, le dispositif d'obturation 18 peut comporter des lamelles destinées à dégager seulement un secteur circulaire prédéfini du cadran 14 lorsqu'il occupe l'état d'exposition, par exemple la moitié ou le quart du cadran 14.

En outre, il peut être envisagé que les lamelles mobiles soient progressivement entraînées en rotation suivant des intervalles de temps prédéfinis. Par exemple, le mécanisme de commande peut être configuré de sorte à entraîner une lamelle en rotation toutes les heures, de sorte que le dispositif d'obturation 18 occupe l'état d'exposition lorsque le soleil est au zénith, ou en journée, et son état d'obturation dans la nuit.

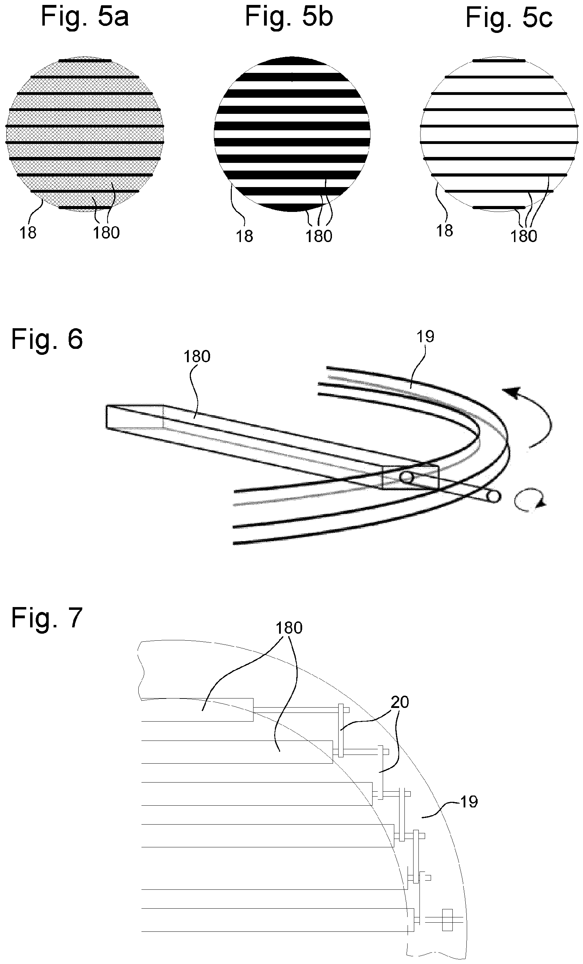

Dans encore un autre exemple de réalisation du dispositif d'obturation 18 représenté sur les figures 5a à 5c, les éléments d'obturation 180 sont formés par un ensemble de volets s'étendant en longueur parallèlement les uns aux autres. Entre leurs extrémités longitudinales, chaque volet s'étend entre deux flancs latéraux.

Les volets délimitent, dans le présent exemple de réalisation, des segments circulaires dans la carrure 11 de la montre 10.

Les volets sont fixés à la carrure 11 par leurs extrémités longitudinales et sont configurés pour être entraînés en rotation autour de leurs axes longitudinaux.

Ils sont en outre dimensionnés de sorte que les flancs latéraux d'un volet soient attenants aux flancs latéraux des volets adjacents pour que le dispositif d'obturation 18 occupe l'état d'obturation, comme illustré sur la figure 5a.

Il y a lieu de noter que d'autres exemples de cette forme de réalisation du dispositif d'obturation 18 peuvent être par ailleurs envisageables, bien que non décrites dans le présent texte, pourvu qu'il comporte des éléments d'obturation 180 mobiles entre une position dans laquelle ils recouvrent l'ensemble de la surface du module de cellules photovoltaïques 16 de sorte à masquer ledit module de la vue de l'utilisateur, et une position dans laquelle ils exposent ledit module à la vue de l'utilisateur, et par voie de conséquence, à la luminosité ambiante.

Dans une forme de réalisation de l'invention, l'organe d'actionnement 19 est constitué par un composant mobile de la montre 10, par exemple une lunette, une couronne ou un bouton poussoir.

Plus particulièrement, la rotation de la lunette ou de la couronne, ou la pression d'un bouton poussoir peut, par le biais du système de transmission 20 de mouvement, permettre le changement d'état du dispositif d'obturation 18.

Ainsi, l'utilisateur peut avantageusement, quand il le souhaite, modifier manuellement l'état du dispositif d'obturation 18 et choisir s'il désir que la face d'habillage ou que le module de cellules photovoltaïques 16 soit visible.

Notamment, comme le montrent schématiquement les figures 6 et 7 dans un exemple de mécanisme de commande et de système de transmission 20 appliqués à l'exemple de réalisation du dispositif d'obturation 18 représenté sur les figures 5a à 5c, la montre 10 peut comporter une lunette cannelée coopérant avec une roue dentée solidaire d'un volet, dit « volet moteur », dont l'axe longitudinal est préférentiellement sécant avec l'axe des aiguilles.

La figure 7 illustre en particulier un système de transmission 20 agencé de sorte à entraîner les volets en rotation. Le système de transmission 20 comprend des organes de liaison, ici constitués de liens souples, par exemple des courroies, agencés entre chaque volet et configuré pour assujettir leur rotation à la rotation du volet moteur.

Autrement dit, les volets sont solidarisés les uns aux autres par les organes de liaison, de sorte qu'un mouvement du volet moteur provoqué par la sollicitation de la lunette entraîne la rotation de l'ensemble des autres volets.

Les organes de liaison peuvent être constitués par tout élément connu en soi de l'homme du métier, par exemple par des engrenages.

Ces exemples de mécanisme de commande et de système de transmission 20 peuvent également être appliqués aux exemples de réalisation du dispositif d'obturation 18 représentés sur les figures 2 à 4c, avec des ajustements à la portée de l'homme du métier.

Dans une autre forme de réalisation de l'invention (non représentée sur les figures), l'organe d'actionnement 19 est constitué par le mouvement horloger 13 de sorte que le dispositif d'obturation 18 soit piloté pour occuper l'état d'obturation à une heure prédéfinie et soit piloté pour occuper l'état d'exposition à une heure prédéfinie.

A titre d'exemple, le dispositif d'obturation 18 peut être piloté pour occuper l'état d'obturation à une heure représentative d'une diminution importante de la luminosité ambiante, par exemple l'heure du coucher du soleil, et pour être piloté pour occuper l'état d'exposition à une heure représentative d'une augmentation importante de la luminosité ambiante, par exemple l'heure du lever du soleil.

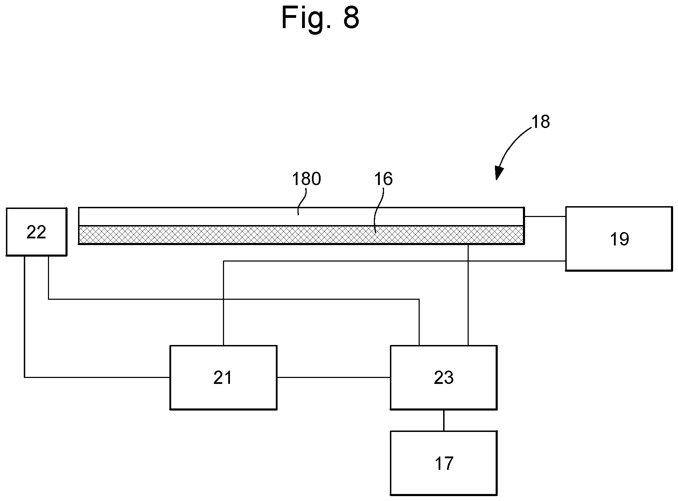

Dans encore une autre forme de réalisation de l'invention représentée par le schéma bloc de la figure 8, l'organe d'actionnement 19 auquel est relié le système de transmission 20 de mouvement peut être constitué par un moteur piloté par des consignes délivrées par une unité de commande 21. Le moteur est avantageusement alimenté en électricité par l'accumulateur électrique 17.

Un tel moteur peut être un moteur pas-à-pas de type Lavet et peut être agencé de manière connue de l'homme du métier au sein de la montre 10, entre le cadran 14 et le fond.

L'unité de commande 21 décrite ici peut comprendre des moyens de calcul, tel qu'un microprocesseur.

Par exemple, l'unité de commande 21 peut être reliée à un capteur de luminosité 22, tel que représenté sur la figure 8, et être configurée pour piloter le moteur de sorte à entraîner le dispositif d'obturation 18 dans l'état d'obturation lorsque la luminosité ambiante est en dessous d'un certain seuil et dans l'état d'exposition lorsque la luminosité ambiante est au-dessus dudit seuil.

Avantageusement, la montre 10 comporte un module de gestion de puissance électrique 23, connu en tant que tel de l'homme du métier, relié à l'unité de commande 21, au moteur, à l'accumulateur électrique 17, aux cellules photovoltaïques 16 et éventuellement au capteur de luminosité 22.

Dans un exemple de réalisation non représenté sur les figures, le capteur de luminosité 22 peut avantageusement être formé par le module de cellules photovoltaïques 16.

Le moteur peut également être piloté par l'unité de commande 21 selon des heures prédéfinies pour entraîner le dispositif d'obturation 18 dans l'état d'obturation à une heure prédéfinie, par exemple une heure représentative du coucher du soleil, et dans l'état d'exposition à une heure prédéfinie, par exemple une heure représentative du lever du soleil.

A cet effet, l'unité de commande 21 peut mettre en oeuvre des capteurs de position liés au mouvement horloger 13 ou aux aiguilles des heures et/ou des minutes.

Dans encore un autre exemple de réalisation, l'unité de commande 21 peut piloter le moteur en réponse à la sollicitation de capteurs de mouvement et/ou de géolocalisation.

En particulier, l'unité de commande 21 peut être configurée pour piloter le moteur de sorte à entraîner le dispositif d'obturation 18 dans l'état d'exposition lorsque le signal émis par les capteurs de mouvement et/ou de géolocalisation est représentatif d'une activité physique ou sportive de l'utilisateur. De manière complémentaire, l'unité de commande 21 peut être configurée pour piloter le moteur de sorte à entraîner le dispositif d'obturation 18 dans l'état d'obturation si le signal émis par les capteurs de mouvement et/ou de géolocalisation n'est pas représentatif d'une activité physique ou sportive de l'utilisateur.

Enfin, l'unité de commande 21 peut être reliée à un capteur apte à délivrer une information relative à l'état de charge de l'accumulateur électrique 17, à ladite unité de commande 21, celle-ci étant configurée pour piloter le moteur de sorte à entraîner le dispositif d'obturation 18 dans l'état d'exposition lorsque l'information fournie par ledit capteur est représentative d'un état de charge de l'accumulateur électrique 17 inférieur à un seuil prédéfini.

Alternativement ou additionnellement à ces caractéristiques, l'unité de commande 21 peut être configurée pour communiquer avec un appareil électronique tel qu'un ordinateur, une tablette électronique ou un téléphone mobile intelligent, de sorte à recevoir des consignes de pilotage du moteur pour changer l'état du dispositif d'obturation 18 via le mécanisme de commande 21.

Avantageusement, le pilotage du moteur peut être réalisé en mettant en oeuvre l'une des caractéristiques précitées ou une combinaison de ces dernières, c'est-à-dire qu'il peut être réalisé suivant des consignes transmises par l'unité de commande 21 sur la base d'informations fournies par un ou plusieurs des capteurs décrits dans les exemples précités et/ou fournies par un appareil électronique.

Autrement dit, l'unité de commande 21 peut piloter le moteur selon un critère unique ou plusieurs critères combinés entre eux.

Avantageusement, l'unité de commande 21 peut piloter le moteur sur la base d'instructions résultant du traitement de données récoltées et accumulées dans le temps par les capteurs de mouvement, de géolocalisation et/ou de luminosité 22, lesdites données étant représentatives du mode de vie de l'utilisateur de la montre 10. Ce traitement est avantageusement réalisé par toute méthode d'analyse des données par apprentissage automatique, par exemple les méthodes de type apprentissage profond, l'analyse pouvant dans ce cas faire usage de réseaux de neurones.

Il y a lieu de préciser que l'invention concerne également toute combinaison techniquement possible des exemples et formes de réalisation décrits ci-avant.

En effet, il est par exemple envisageable de réaliser une montre 10 selon la présente invention, comprenant un disque avec des propriétés photochromiques négatives combiné avec l'un des éléments d'obturation 180 décrit ci-dessus, relié à un mécanisme de commande 21.

Par ailleurs, il a été considéré dans le présente texte une montre 10 dont le boitier est de forme ronde. Toutefois, le boitier de la montre 10 peut être de forme différente, par exemple ovale ou carrée, la forme des éléments d'obturation 180 étant alors adaptée à la forme dudit boitier.

## Revendications

1. Montre (10) comprenant un boitier pourvu d'une carrure (11) à laquelle sont fixés un fond et une glace (12), d'un ensemble de composants formant un mouvement horloger (13), et d'un cadran (14) disposé entre ledit mouvement et la glace (12), le cadran (14) comportant un module de cellules photovoltaïques (16) relié à un accumulateur électrique (17) destiné à fournir une source d'énergie électrique, ladite montre (10) étant **caractérisée en ce que** ledit cadran (14) comprend en outre un dispositif d'obturation (18) agencé entre le module de cellules photovoltaïques (16) et la glace (12) de la montre (10), et configuré pour pouvoir occuper un état d'obturation dans lequel il masque l'ensemble du module de cellules photovoltaïques (16) et un état d'exposition dans lequel il expose tout ou partie du module de cellules photovoltaïques (16).

2. Montre (10) selon la revendication 1, comprenant un mécanisme de commande (21) comportant un système de transmission (20) de mouvement configuré pour déplacer des éléments d'obturation (180) du dispositif d'obturation (18) sous les sollicitations d'un organe d'actionnement (19), de sorte à entraîner le dispositif d'obturation (18) dans l'état d'obturation ou dans l'état d'exposition.

3. Montre (10) selon la revendication 2, dans laquelle l'organe d'actionnement (19) est constitué par un moteur piloté par des consignes délivrées par une unité de commande (21).

4. Montre (10) selon la revendication 3, dans laquelle l'unité de commande (21) comporte un capteur de luminosité (22) configuré pour piloter le moteur de sorte à entraîner le dispositif d'obturation (18) dans l'état d'obturation lorsque la luminosité est en dessous d'un certain seuil et dans l'état d'exposition lorsque la luminosité est au-dessus dudit seuil.

5. Montre (10) selon l'une des revendications 3 ou 4, dans laquelle l'unité de commande (21) comporte un capteur apte à délivrer une information relative à l'état de charge de l'accumulateur électrique (17), à l'unité de commande (21), cette dernière étant configurée pour piloter le moteur de sorte à entraîner le dispositif d'obturation (18) dans l'état d'exposition lorsque l'information fournie par ledit capteur est représentative d'un état de charge de l'accumulateur électrique (17) inférieur à un seuil prédéfini.

6. Montre (10) selon l'une des revendications 3 à 5, dans laquelle l'unité de commande (21) est configurée pour piloter le moteur de sorte à entraîner le dispositif d'obturation (18) dans l'état d'exposition, en réponse à la sollicitation de capteurs de mouvement et/ou de géolocalisation, lorsque ladite sollicitation provoque l'émission d'un signal représentatif d'une activité physique ou sportive de l'utilisateur.

7. Montre (10) selon l'une des revendications 3 à 6, dans laquelle l'unité de commande (21) est configurée pour piloter le moteur sur la base d'instructions résultant du traitement par apprentissage automatique de données récoltées et accumulées dans le temps par des capteurs de mouvement, de géolocalisation et/ou de luminosité.

8. Montre (10) selon la revendication 2, dans laquelle l'organe d'actionnement (19) est constitué par une lunette, une couronne ou un bouton poussoir.

9. Montre (10) selon la revendication 2, dans laquelle l'organe d'actionnement (19) est constitué par le mouvement horloger (13), de sorte que le dispositif d'obturation (18) soit piloté pour occuper l'état d'obturation à une heure prédéfinie et soit piloté pour occuper l'état d'exposition à une heure prédéfinie.

10. Montre (10) selon l'une des revendications 1 à 9, dans laquelle le dispositif d'obturation (18) est formé par un iris à lamelles, lesdites lamelles étant configurées pour se loger dans la carrure (11) lorsque le dispositif d'obturation occupe l'état d'exposition et étant configurées pour être déployées de sorte à recouvrir le module de cellules photovoltaïques (16) lorsque le dispositif d'obturation (18) occupe l'état d'obturation.

11. Montre (10) selon l'une des revendications 1 à 9, dans laquelle le dispositif d'obturation (18) comporte deux disques comportant des secteurs circulaires opaques et des secteurs circulaires transparents, lesdits disques étant agencés coaxialement en vis-à-vis l'un de l'autre et mobiles en rotation l'un relativement à l'autre, lesdits disques étant configurés de sorte que les secteurs circulaires opaques et les secteurs circulaires transparents d'un disque soient agencés respectivement en regard des secteurs circulaires opaques et les secteurs circulaires transparents de l'autre disque, pour que le dispositif d'obturation (18) occupe l'état d'exposition, et de sorte que les secteurs circulaires opaques et les secteurs circulaires transparents d'un disque soient agencés respectivement en regard des secteurs circulaires transparents et les secteurs circulaires opaques de l'autre disque, pour que le dispositif d'obturation (18) occupe l'état d'obturation.

12. Montre (10) selon l'une des revendications 1 à 9, dans laquelle le dispositif d'obturation (18) est formé par un ensemble de lamelles de la forme de secteurs circulaires, agencées de manière mobile en rotation autour de l'axe des aiguilles les unes par rapport aux autres de sorte à être adjacentes les unes des autres pour que le dispositif d'obturation (18) occupe l'état d'obturation, et de sorte à être superposées les unes aux autres pour que le dispositif d'obturation (18) occupe l'état d'exposition.

13. Montre (10) selon l'une des revendications 1 à 9, dans laquelle le dispositif d'obturation (18) est formé par un ensemble de volets s'étendant en longueur parallèlement les uns aux autres, lesdits volets étant configurés pour être entraînés en rotation autour de leur axe longitudinal de sorte que les flancs latéraux d'un volet soient attenants aux flancs latéraux des volets adjacents pour que le dispositif d'obturation (18) occupe l'état d'obturation.

14. Montre (10) selon l'une des revendications 1 à 13, dans laquelle le module de cellules photovoltaïques (16) est recouvert d'une couche de lubrifiant, ladite couche étant interposée entre ledit module et le dispositif d'obturation.

15. Montre (10) selon la revendication 1, dans laquelle le dispositif d'obturation (18) comporte un disque présentant des propriétés photochromiques négatives, c'est-à-dire que le disque est adapté à présenter un aspect opaque lorsque la luminosité ambiante est inférieure à un certain seuil et à présenter un aspect transparent lorsque la luminosité ambiante est supérieure audit seuil.

16. Montre (10) selon l'une des revendications 1 à 14, dans laquelle le dispositif d'obturation (18) comporte un disque présentant des propriétés électrochromiques, ladite montre (10) comportant un module de gestion relié à un capteur de luminosité et configuré pour soumettre le disque à une tension électrique d'intensité prédéterminée pour que ledit disque prenne un aspect opaque lorsque la luminosité ambiante est inférieure à un seuil prédéfini.

17. Montre (10) selon la revendication 16, dans laquelle le module de gestion est configuré de sorte à soumettre le disque à une tension électrique d'intensité prédéterminée pour que ledit disque prenne un aspect opaque lorsque l'accumulateur électrique (17) est entièrement chargé.

18. Montre selon l'une des revendications 16 ou 17, comprenant un organe d'actionnement (19) configuré pour commander, sur sollicitation de l'utilisateur, le module de gestion de sorte à, alternativement, appliquer ou non une tension au disque afin qu'il prenne un aspect opaque ou transparent.
